# EUROPÄISCHE PATENTANMELDUNG

(11) **EP 1 655 624 A2**
(43) Veröffentlichungstag der Anmeldung: **10.05.2006**
(21) Anmeldenummer: 05023357.6
(22) Anmeldetag: 26.10.2005
(51) Int. Cl.: G01V 8/20

(54) **Optischer Sensor**

(30) Priorität: 05.11.2004 DE 102004053526
(71) Anmelder: Leuze lumiflex GmbH + Co. KG, 82256 Fürstenfeldbruck (DE)
(72) Erfinder: Hartl, Paul, 80797 München (DE); Stock, Klaus-Jürgen, 86529 Schrobenhausen (DE); Koperski, Joachim, 85579 Neubiberg (DE)
(74) Vertreter: Ruckh, Rainer Gerhard

(57) **Zusammenfassung**

Die Erfindung betrifft einen optischen Sensor (1) zur Erfassung von Objekten in einem Überwachungsbereich (4) mit wenigstens einem Sendelichtstrahlen (5) emittierenden Sender (6), wenigstens einem Empfangslichtstrahlen (15) empfangenden Empfänger (10), wenigstens einer Rechnereinheit (13), in welcher in Abhängigkeit der Empfangssignale am Ausgang des Empfängers (10) ein binäres Objektfeststellungssignal generiert wird, und mit wenigstens einer Sicherheitsausgangsschaltung (14), welche in Abhängigkeit des Objektfeststellungssignals zur Generierung eines über einen Schaltausgang (24) ausgebbaren Schaltsignals ein- und ausschaltbar ist. In der Rechnereinheit (13) werden fortlaufend Testsignale generiert und in die Sicherheitsausgangsschaltung (14) in ein- und ausgeschalteten Zustand eingelesen. In der Sicherheitsausgangsschaltung (14) werden als Antwort auf die Testsignale ohne Änderung des Schaltsignals Mess-Signale generiert und in die Rechnereinheit (13) rückgelesen. In der Rechnereinheit (13) wird durch Auswertung der Signalformen der Mess-Signale unabhängig von einer am Schaltausgang (24) anliegenden Last (25) die Funktionsfähigkeit der Sicherheitsausgangsschaltung (14) überprüft.

## Beschreibung

Die Erfindung betrifft einen optischen Sensor und ein Verfahren zur Funktionsüberprüfung eines optischen Sensors.

Derartige optische Sensoren werden insbesondere im Bereich der Sicherheitstechnik eingesetzt und dienen zur Überwachung von Gefahrenbereichen von Arbeitsgeräten wie zum Beispiel Abkantpressen, Robotern, fahrerlosen Transportsystemen.

Mit dem vom optischen Sensor erfassten Überwachungsbereich wird der Gefahrenbereich an einem derartigen Arbeitsgerät überwacht. Dringt ein Objekt oder eine Person in den Überwachungsbereich ein, wird in der Auswerteeinheit des optischen Sensors ein entsprechendes Schaltsignal mit einem vorgegebenen Schaltzustand generiert, welches über einen Sicherheitsschaltausgang ausgegeben wird. Mit dem Schaltsignal wird das Arbeitsgerät abgeschaltet, das heißt deaktiviert, um eine Gefährdung von Personen auszuschließen. Liegt dagegen kein Eingriff in den Überwachungsbereich vor, so nimmt das Schaltsignal einen zweiten Schaltzustand ein, so dass das Arbeitsgerät eingeschaltet, das heißt aktiviert ist.

Bei stationären Anwendungen zur Sicherung von Arbeitsgeräten werden insbesondere als Lichtgitter ausgebildete optische Sensoren eingesetzt. Ein derartiges Lichtgitter ist beispielsweise aus der DE 39 39 191 A1 bekannt.

Bei stationären und insbesondere auch bei mobilen Anwendungen werden zur Gefahrenbereichsabsicherung insbesondere auch als Flächendistanzsensoren ausgebildete optische Sensoren eingesetzt. Ein derartiger Flächendistanzsensor ist beispielsweise aus der DE 19 917 509 C1 bekannt. Der Flächendistanzsensor besteht im Wesentlichen aus einem Distanzsensor mit einem Sendelichtstrahlen emittierenden Sender und einem Empfangslichtstrahlen empfangenden Empfänger. Die Distanzmessung erfolgt dabei nach dem Laufzeitverfahren, das heißt es wird die Lichtlaufzeit der zu einem Objekt geführten Sendelichtstrahlen und von diesem zurückreflektierten Empfangslichtstrahlen bestimmt. Zur Erfassung von Objekten innerhalb eines Überwachungsbereichs werden die vom Sender emittierten Sendelichtstrahlen mittels einer Ablenkeinheit periodisch abgelenkt.

Aus der DE 195 08 841 A1 ist eine Sicherheitsschalteranordnung für die eingangs genannten optischen Sensoren bekannt, mittels derer in Abhängigkeit der Sensorsignale eines optischen Sensors ein Arbeitsgerät aktivierbar oder deaktivierbar ist. Die Sicherheitsschalteranordnung umfasst zwei Aktoren mit jeweils aus Halbleiterelementen bestehenden schalterartigen Mitteln, welche über zwei Rechnereinheiten angesteuert werden. Zur Testung der Aktoren werden diesen von den Rechnereinheiten generierte Testimpulse generiert. Die darauf in den Aktoren generierten Antwortimpulse werden in den Rechnereinheiten zur Funktionsüberprüfung der Aktoren ausgewertet. Mittels einer separaten Spannungsüberwachungseinheit wird geprüft, ob sich die Betriebsspannung der Rechnereinheiten in einem vorgegebenen Sollwertbereich befindet.

Der Erfindung liegt die Aufgabe zugrunde einen optischen Sensor der eingangs genannten Art bereitzustellen, bei welchem mit möglichst geringem Aufwand eine sichere Signalausgabe gewährleistet ist.

Zur Lösung dieser Aufgabe sind die Merkmale des Ansprüche 1 und 12 vorgesehen. Vorteilhafte Ausführungsformen und zweckmäßige Weiterbildungen der Erfindung sind in den Unteransprüchen beschrieben.

Der Grundgedanke der Erfindung besteht darin, in der Rechnereinheit Testsignale zu generieren und an die zu überprüfende Sicherheitsausgangsschaltung auszugeben, welche charakteristische Testmuster enthalten, auf welche in der Sicherheitsausgangsschaltung in Form der Mess-Signale eine Antwort generiert wird, die für jegliche an den Schaltausgang des optischen Sensors angeschlossene Last eindeutig ist.

Damit kann in der Rechnereinheit die Funktionsfähigkeit der Sicherheitsausgangsschaltung durch Analyse der Signalformen der in die Rechnereinheit rückgelesenen Mess-Signale sicher und zuverlässig überprüft werden. Dabei sind für jede am Schaltausgang angeschlossene Last die die Antwortfunktionen bildenden Mess-Signale bei korrekter Funktion der Sicherheitsausgangsschaltung bekannt und vorzugsweise als Referenz-Signale in der Rechnereinheit abgespeichert. Jegliche Abweichung der in der Rechnereinheit während der fortlaufenden Funktionsüberprüfungen der Sicherheitsausgangsschaltung registrierten Mess-Signalen von den jeweiligen Referenz-Signalen wird als Fehlfunktion der Sicherheitsausgangsschaltung interpretiert, so dass darauf die Sicherheitsausgangsschaltung über die Rechnereinheit verriegelt, das heißt ausgeschaltet wird. Dadurch wird durch Ausgabe des dem Verriegelungszustand der Sicherheitsausgangsschaltung entsprechenden Schaltsignals das daran angeschlossene Arbeitsgerät deaktiviert, das heißt dieses wird in den sicheren Zustand überführt.

Mit der erfindungsgemäßen Überprüfung kann somit auf einfache Weise eine umfassende Funktionsüberprüfung der Sicherheitsausgangsschaltung zur Erfüllung der sicherheitstechnischen Anforderungen, die an den optischen Sensor bei Einsatz in sicherheitsrelevanten Applikationen gestellt werden, erfüllt werden.

Dabei kann mit der erfindungsgemäßen Funktionsüberprüfung der Sicherheitsausgangsschaltung nicht nur festgestellt werden, welche Last am Schaltausgang anliegt. Vielmehr können verschiedenartige Fehlerzustände in der Sicherheitsausgangsschaltung, insbesondere Kurzschlüsse gegen Versorgungsspannung oder Masse der Schaltungsanordnung sowie niederohmige und hochohmige Verbindungen zur Versorgungsspannung oder gegen Masse aufgedeckt werden. Dabei ist insbesondere vorteilhaft, dass die Funktionsüberprüfung der Sicherheitsausgangsschaltung sowohl im eingeschalteten als auch im ausgeschalteten Zustand erfolgt, das heißt die Funktionsüberprüfung ist unabhängig vom Schaltzustand der Sicherheitsausgangsschaltung.

Weiterhin können bei dem erfindungsgemäßen optischen Sensor auch mehrere, insbesondere zwei, an die Rechnereinheit angeschlossene Sicherheitsausgangsschaltungen überprüft werden, wobei diesen hierzu zeitlich versetzt die Testsignale zugeführt werden, um zu erreichen, dass jede Antwort einer Sicherheitsausgangsschaltung auf die Testsignale unabhängig zu den Antworten der weiteren Sicherheitsausgangsschaltung ist. Mit dieser Funktionsüberprüfung können insbesondere Querschlüsse oder Kurzschlüsse zwischen den Sicherheitsausgangsschaltungen erkannt werden.

Ein wesentlicher Vorteil der Erfindung besteht darin, dass die in der Rechnereinheit generierten Testsignale direkt in die Sicherheitsausgangsschaltung eingelesen und von dort, vorzugsweise über einen Spannungsteiler und einen nachgeordneten Analog-Digital-Wandler, unmittelbar in die Rechnereinheit rückgelesen werden. Die Funktionsüberprüfung ist somit vollständig in die Rechnereinheit verlagert, so dass nahezu kein separater Schaltungsaufwand zur Überprüfung der Sicherheitsausgangsschaltung notwendig ist.

Die Rechnereinheit ist bevorzugt als digitaler Signalprozessor ausgebildet. In der Rechnereinheit kann prinzipiell die Analyse der Mess-Signale durch Auswertung der kompletten Signalverläufe erfolgen. Besonders vorteilhaft wird zur Funktionsüberprüfung der Sicherheitsausgangsschaltung jedoch nur eine begrenzte Zahl von diskreten Abtastpunkten der Mess-Signale herangezogen, wodurch eine beträchtliche Reduktion der Rechenzeit zur Funktionsüberprüfung erzielt wird.

Die Erfindung wird im Nachstehenden anhand der Zeichnungen erläutert. Es zeigen:
- Figur 1:: Schematische Darstellung eines als Lichtgitter ausgebildeten optischen Sensors.
- Figur 2:: Schematische Darstellung eines als Flächendistanzsensor ausgebildeten optischen Sensors.
- Figur 3:: Schematische Darstellung einer Sicherheitsausgangsschaltung für die optischen Sensoren gemäß den Figuren 1 und 2.
- Figur 4:: Zeitdiagramme der Test- und Mess-Signale zur Funktionsüberprüfung der Sicherheitsausgangsschaltung a) im eingeschalteten Zustand, b) im ausgeschalteten Zustand.
- Figur 5:: Zeitdiagramme der Test- und Mess-Signale für eine weitere Funktionsüberprüfung der Sicherheitsausgangsschaltung im ausgeschalteten Zustand mit einer kapazitiven Last an deren Ausgang.
- Figur 6:: Zeitdiagramme der Test- und Mess-Signale für eine weitere Funktionsüberprüfung der Sicherheitsausgangsschaltung im ausgeschalteten Zustand mit einer ohmschen Last an deren Ausgang.
- Figur 7:: Anordnung zweier Sicherheitsausgangsschaltungen für einen optischen Sensor gemäß den Figuren 1 und 2.
- Figur 8:: Zeitdiagramme der Testsignale zur Funktionsüberprüfung der Sicherheitsausgangsschaltungen gemäß Figur 7 c) für die erste Sicherheitsausgangsschaltung, d) für die zweite Sicherheitsausgangsschaltung.

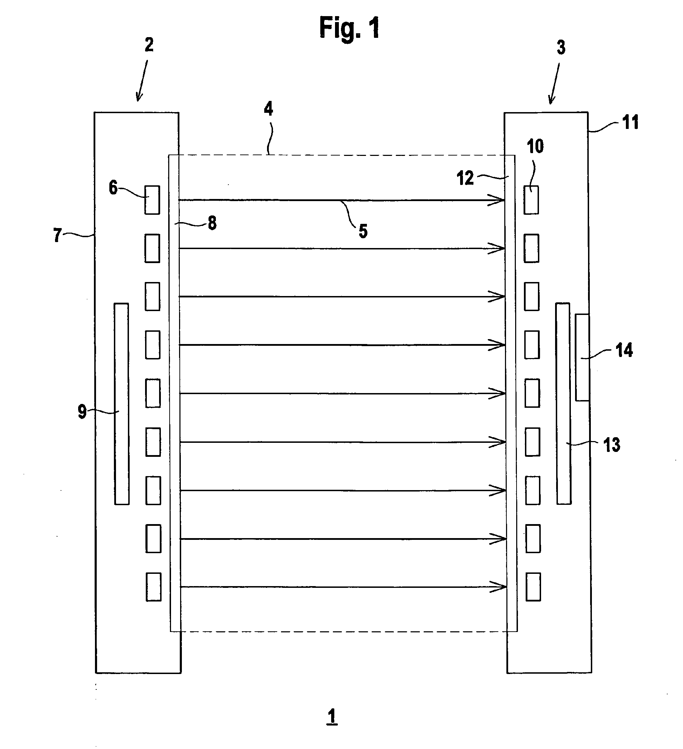

Figur 1 zeigt schematisch den Aufbau eines als Lichtgitter ausgebildeten optischen Sensors 1. Das Lichtgitter weist eine Sendereinheit 2 und eine Empfängereinheit 3 auf, welche beidseits eines Überwachungsbereichs 4 in Abstand gegenüberliegend angeordnet sind.

Die Sendereinheit 2 weist mehrere vertikal in Abstand angeordnete, Sendelichtstrahlen 5 emittierende Sender 6 auf, die in einem ersten Gehäuse 7 angeordnet sind. Die identisch ausgebildeten Sender 6 sind von Leuchtdioden gebildet und liegen hinter einem Fenster 8, durch welches die Sendelichtstrahlen 5 in den Überwachungsbereich 4 geführt sind. Zur Strahlformung der Sendelichtstrahlen 5 können den Sendern 6 nicht dargestellte Sendeoptiken nachgeordnet sein.

Die Ansteuerung der Sender 6 erfolgt über eine Sendersteuereinheit 9. Die Sendersteuereinheit 9 besteht aus einem Mikroprozessorsystem oder dergleichen. Die Sender 6 werden dabei zyklisch nacheinander aktiviert.

Die Empfängereinheit 3 weist mehrere vertikal in Abstand angeordnete Empfänger 10 auf, die in einem zweiten Gehäuse 11 angeordnet sind. Die identisch ausgebildeten Empfänger 10 sind von Photodioden gebildet und liegen hinter einem weiteren Fenster 12, durch welches die Sendelichtstrahlen 5 aus dem Überwachungsbereich 4 auf die Empfänger 10 geführt sind. Zur Fokussierung der Sendelichtstrahlen 5 auf die Empfänger 10 können den Empfängern 10 nicht dargestellte Empfangsoptiken vorgeordnet sein.

Die Auswertung der an den Ausgängen der Empfänger 10 anstehenden Empfangssignale sowie die Steuerung des Betriebs der Empfänger 10 erfolgt in einer Empfängersteuereinheit, welche im einfachsten Fall von einer einzelnen Rechnereinheit 13 gebildet ist. Je nach Sicherheitsanforderung kann die Empfängersteuereinheit auch einen redundanten Aufbau bestehend aus zwei sich überwachenden Rechnereinheiten 13 aufweisen. Die oder jede Rechnereinheit 13 ist im vorliegenden Fall von einem digitalen Signalprozessor gebildet. Alternativ kann als Rechnereinheit 13 ein Microcontroller vorgesehen sein.

Wie aus Figur 1 ersichtlich entspricht die Anzahl der Sender 6 der Anzahl der Empfänger 10 des Lichtgitters. Dabei ist jeweils einem Sender 6 ein gegenüberliegender Empfänger 10 zugeordnet, auf welchen bei freiem Strahlengang die Sendelichtstrahlen 5 dieses Senders 6 auftreffen.

Jeder Sender 6 und der diesem zugeordnete Empfänger 10 bildet eine Strahlachse des Lichtgitters. Die Strahlachsen definieren den Überwachungsbereich 4, der im vorliegenden Fall in einer vertikalen Ebene verläuft. Über die Sendersteuereinheit 9 und die Empfängersteuereinheit werden die einzelnen Strahlachsen einzeln nacheinander zyklisch aktiviert. Die Synchronisierung dieses Lichtgitterbetriebs erfolgt beispielsweise anhand den von dem ersten Sender 6 emittierten Sendelichtstrahlen 5, welchen eine individuelle Kodierung aufgeprägt ist, die sich von den Kodierungen der übrigen Sendelichtstrahlen 5 unterscheidet.

Generell kann der optische Sensor 1 gemäß Figur 1 auch derart abgewandelt sein, dass die Sender 6 und Empfänger 10 in einem gemeinsamen Gehäuse integriert sind, welches an einem Rand des Überwachungsbereiches 4 angeordnet ist. Bei freiem Strahlengang werden die von einem Sender 6 emittierten Sendelichtstrahlen 5 auf einen am gegenüberliegenden Rand des Überwachungsbereiches 4 angeordneten Reflektor geführt und von dort zurück zum zugeordneten Empfänger 10 reflektiert.

Bei freiem Strahlengang des Lichtgitters treffen die Sendelichtstrahlen 5 sämtlicher Sender 6 ungehindert auf die zugeordneten Empfänger 10. Tritt ein Objekt oder eine Person in den Überwachungsbereich 4, so wird wenigstens eine Strahlachse des Lichtgitters zumindest teilweise unterbrochen. Ein derartiger Objekteingriff wird in der Auswerteeinheit 13 durch eine Schwellwertbewertung der Ausgangssignale der Empfänger 10 erfasst. Das dadurch generierte binäre Objektfeststellungssignal wird über eine Sicherheitsausgangsschaltung 14 ausgegeben. Je nach Sicherheitsanforderung kann die Sicherheitsausgangsschaltung 14 einen ein- oder mehrkanaligen Aufbau aufweisen.

Über die Sicherheitsausgangsschaltung 14 werden Schaltsignale zur Steuerung eines nicht dargestellten Arbeitsgerätes ausgegeben.

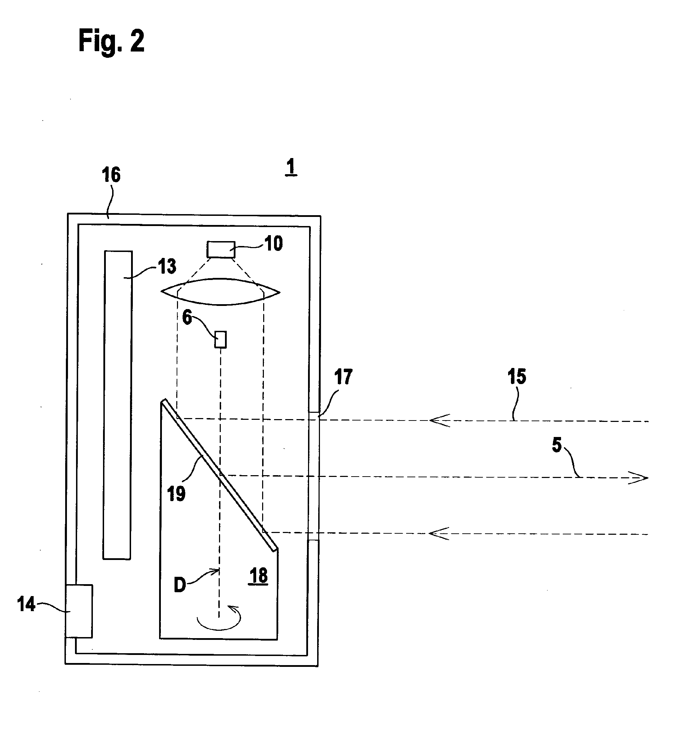

Figur 2 zeigt ein Ausführungsbeispiel eines als Flächendistanzsensor ausgebildeten optischen Sensors 1. Der Flächendistanzsensor weist einen nach dem Lichtlaufzeitverfahren arbeitenden Distanzsensor auf. Der Distanzsensor besteht im Wesentlichen aus einem Sendelichtstrahlen 5 emittierenden Sender 6 und einem Empfangslichtstrahlen 15 empfangenden Empfänger 10. Der Sender 6 ist von einer Laserdiode gebildet, der Empfänger 10 besteht aus einer Photodiode. Zur Distanzmessung wird in der Auswerteeinheit 13 des optischen Sensors 1 die Lichtlaufzeit der vom Sender 6 emittierten, auf ein Objekt geführten Sendelichtstrahlen 5 und der vom Objekt reflektierten Empfangslichtstrahlen 15 ausgewertet.

Der optische Sensor 1 ist in einem Gehäuse 16 integriert. In der Frontwand des Gehäuses 16 befindet sich ein Fenster 17, durch welches die Sendelichtstrahlen 5 und die Empfangslichtstrahlen 15 geführt sind.

Der optische Sensor 1 weist zur periodischen Ablenkung der Sendelichtstrahlen 5 eine Ablenkeinheit 18 auf. Mittels der Ablenkeinheit 18 werden die Sendelichtstrahlen 5 innerhalb eines Winkelbereichs abgelenkt, der im vorliegenden Fall 180° beträgt. Die Ablenkeinheit 18 weist einen motorisch getriebenen, um eine Drehachse D drehbaren Spiegel 19 auf, über welchen die Sendelichtstrahlen 5 und die Empfangslichtstrahlen 15 geführt sind.

Durch die Drehbewegung des Spiegels 19 werden die Sendelichtstrahlen 5 in einer horizontalen Ebene geführt. Die Abmessungen des Fensters 17 definieren dabei den Winkelbereich, innerhalb dessen die Sendelichtstrahlen 5 in dieser Ebene geführt sind.

Dieser Winkelbereich sowie eine mit dem Distanzsensor noch erfassbare Maximaldistanz begrenzen den Überwachungsbereich 4, innerhalb dessen mit dem Flächendistanzsensor Objekte erfassbar sind.

Analog zur Ausführungsform gemäß Figur 1 weist der optische Sensor 1 gemäß Figur 2 eine der Rechnereinheit 13 zugeordnete Sicherheitsausgangsschaltung 14 auf, über welche insbesondere Schaltsignale zur Steuerung des Arbeitsgerätes ausgebbar sind.

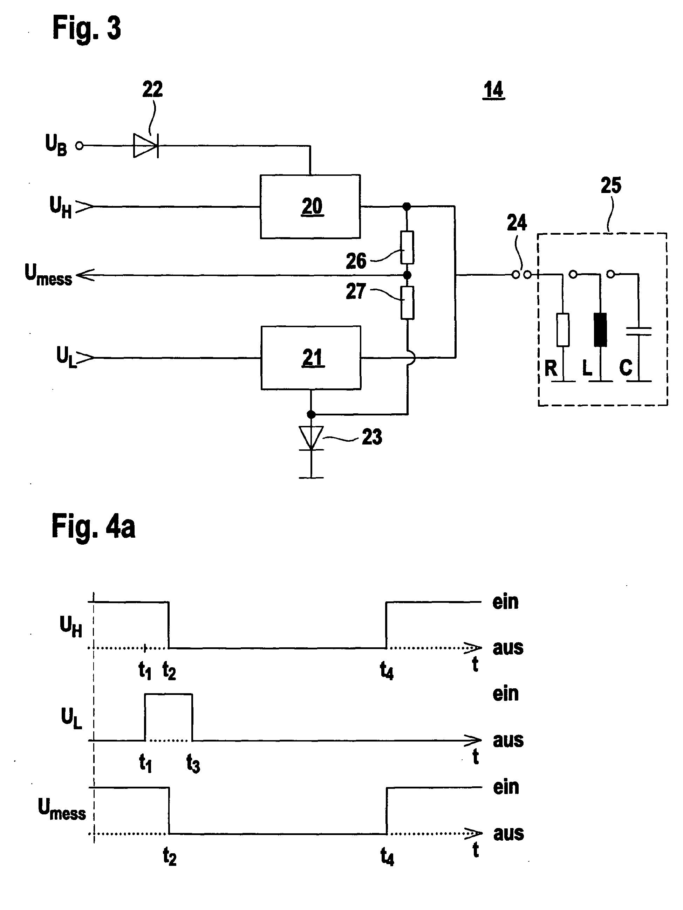

Figur 3 zeigt schematisch den prinzipiellen Aufbau einer Sicherheitsausgangsschaltung 14 für die optischen Sensoren 1 gemäß den Figuren 1 und 2. Die Sicherheitsausgangsschaltung 14 weist einen High-Side-Treiber 20 und einen Low-Side-Treiber 21 auf, die jeweils aus einer diskreten oder integrierten Schaltungsanordnung aus Halbleiterbauelementen bestehen. Dem High-Side-Treiber 20 wird über eine Diode 22 eine Versorgungsspannung U_{B} zugeführt. Dem Low-Side-Treiber 21 ist eine gegen Massepotential geschaltete Schutzdiode 23 zugeordnet. Zur Generierung des binären Schaltsignals, welches über einen Schaltausgang 24 ausgebbar ist, wird mittels des High-Side-Treibers 20 eine Spannung auf den Schaltausgang 24 geschaltet, wodurch die Sicherheitsausgangsschaltung 14 eingeschaltet wird und entsprechend das Schaltsignal auf einem High-Pegel liegt. Mit dem Low-Side-Treiber 21 wird der Schaltausgang 24 dagegen gegen Masse geschaltet, so dass das Schaltsignal auf einem Low-Pegel liegt. Zur Durchführung dieser Ein- und Ausschaltvorgänge weisen der High-Side-Treiber 20 und Low-Side-Treiber 21 jeweils geeignete Halbleiter-Schalter, insbesondere in Form von Transistoren, auf. Mittels der Schutzdiode 23 werden bei sogenannten Common-Mode-Fehlern auftretende Leckströme innerhalb der Sicherheitsausgangsschaltung 14 auf einen Maximalwert begrenzt. Derartige Common-Mode-Fehler zeigen sich darin, dass bei Betrieb der Sicherheitsausgangsschaltung 14 diese bei Verlust der Masseverbindung dennoch noch einen Strom liefert.

Wie in Figur 3 schematisch dargestellt liegt im Betrieb des optischen Sensors 1 mit der Sicherheitsausgangsschaltung 14 an deren Schaltausgang 24 eine Last 25 an, wobei diese als ohmsche, kapazitive und/oder induktive Last 25 ausgebildet sein kann. Ist die Last 25 beispielsweise von einer SPS-Steuerung eines Arbeitsgerätes gebildet, so liegt eine RC-Glied-artige Last 25 am Schaltausgang 24 an.

Zur Funktionsüberprüfung der Sicherheitsausgangsschaltung 14 werden in der Rechnereinheit 13 Testsignale U_{H}, U_{L} generiert, die der Sicherheitsausgangsschaltung 14 zugeführt werden. Die als Antwort auf die Testsignale in der Rechnereinheit 13 generierten Mess-Signale Uₘₑₛₛ werden über einen von zwei Widerständen 26, 27 gebildeten Spannungsteiler in die Rechnereinheit 13 rückgelesen. Wie aus Figur 3 ersichtlich werden dabei erste Testsignale U_{H} dem High-Side-Treiber 20 und zweite Testsignale U_{L} dem Low-Side-Treiber 21 zugeführt. Über den zwischen den High-Side-Treiber 20 und den Low-Side-Treiber 21 geschalteten Spannungsteiler werden die durch die beiden Testsignale U_{H}, U_{L} generierten Mess-Signale Uₘₑₛₛ in die Rechnereinheit 13 über einen nicht gesondert dargestellten Analog-Digital-Wandler eingelesen.

Die Testsignale U_{H}, U_{L} bilden Testmuster derart, dass die dadurch generierten Mess-Signale eine lastunabhängige Antwort bilden, die die fehlerfreie Funktion der Sicherheitsausgangsschaltung 14 eindeutig kennzeichnen. In der Rechnereinheit 13 werden Fehler der Sicherheitsausgangsschaltung 14 dadurch aufgedeckt, dass die aktuell registrierten Mess-Signale von der bekannten Antwortfunktion im fehlerfreien Fall abweichen.

Wird eine derartige Abweichung und damit ein Fehler in der Sicherheitsausgangsschaltung 14 in der Rechnereinheit 13 erkannt, wird die Sicherheitsausgangsschaltung 14 verriegelt und der Schaltausgang 24 dadurch abgeschaltet, das heißt auf Low-Pegel gesetzt, so dass ein daran angeschlossenes Arbeitsgerät deaktiviert wird und damit in den sicheren Zustand überführt wird.

Die Funktionsüberprüfung mittels der in der Rechnereinheit 13 generierten Testsignale erfolgt fortlaufend, vorzugsweise zyklisch innerhalb vorgegebener Zykluszeiten. Dabei sind die Testmuster der Testsignale U_{H}, U_{L} so gewählt, dass durch die Testung der Schaltzustand des Schaltsignals am Schaltausgang 24 unverändert bleibt.

Die Testung der Sicherheitsausgangsschaltung 14 erfolgt sowohl im eingeschalteten als auch im ausgeschalteten Zustand der Sicherheitsausgangsschaltung 14.

Figur 4a zeigt schematisch die Zeitdiagramme bei der Testung der Sicherheitsausgangsschaltung 14 im eingeschalteten Zustand. Die Testsignale U_{L}, U_{H} zur Testung der Sicherheitsausgangsschaltung 14 sind in Form von binären Signalfolgen mit den Signalzuständen "ein" und "aus" gebildet. Die Testung erfolgt dabei im Zeitintervall zwischen t = t₁ und t = t₄. Das untere Diagramm in Figur 4a zeigt das durch die Testsignale U_{H}, U_{L} generierte Mess-Signal Uₘₑₛₛ im fehlerfreien Fall. Die Form des in diesem Fall als binäres Signal ausgebildeten Mess-Signals ist unabhängig von der Ausbildung der Last 25 am Schaltausgang 24.

Im Zeitintervall zwischen t₁ und t₂ nehmen beide Testsignale den Signalzustand "ein" an. Mit diesem Testmuster erfolgt die Testung der Schutzdiode 23. Nur im fehlerfreien Fall bleibt das Mess-Signal in dem in Figur 4a dargestellten Signalzustand "ein".

Im Zeitintervall zwischen t₂ und t₃ werden Testsignale U_{H}, U_{L} mit komplementären Signalwerten in der Rechnereinheit 13 generiert, die eine Pulsanfrage für das System der Sicherheitsausgangsschaltung 14 bilden. Im darauf folgenden Zeitintervall zwischen t₃ und t₄ nehmen beide Testsignale U_{H} und U_{L} den Signalwert "aus" ein. Eine fehlerfreie Funktion der Sicherheitsausgangsschaltung 14 liegt vor, wenn wie in Figur 4a dargestellt, das Mess-Signal bei Auftreten der Pulsanfrage im Zeitintervall in den Signalzustand "aus" wechselt und in diesem auch während des Zeitintervalls zwischen t₃ und t₄ verbleibt. Mit der im Zeitintervall zwischen t₂ und t₄ durchgeführten Funktionsüberprüfung können unterschiedliche Fehler in der Sicherheitsausgangsschaltung 14, wie zum Beispiel Kurzschlüsse zur Versorgungsspannung oder Masse oder niederohmige und hochohmige Verbindungen zur Versorgungsspannung oder gegen Masse aufgedeckt werden.

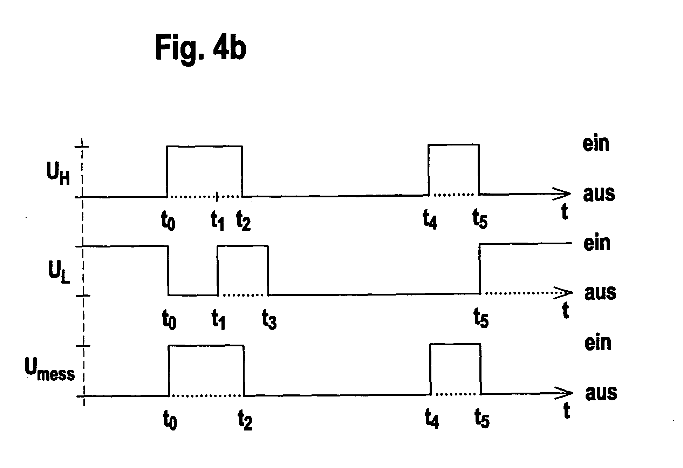

Figur 4b zeigt die Zeitdiagramme bei der Testung der Sicherheitsausgangsschaltung 14 im ausgeschalteten Zustand. Wie aus Figur 4b ersichtlich, nimmt im ausgeschalteten Zustand (zur Zeit t < t₀) das Testsignal U_{H} den Signalzustand "aus" ein. Das Testsignal U_{L} nimmt den Signalzustand "ein" ein. Zur Einleitung der Testung der Sicherheitsausgangsschaltung 14 werden bei t = t₀ die Testsignale U_{L}, U_{H} umgesteuert, so dass U_{H} den Signalzustand "ein" und U_{L} den Signalzustand "aus" einnimmt. Nun liegen die Signalzustände der eingeschalteten Sicherheitsausgangsschaltung 14 vor. Demzufolge kann im Zeitintervall zwischen t = t₁ und t = t₄ dieselbe Prüfung wie die in Figur 4a dargestellte Testung für die eingeschaltete Sicherheitsausgangsschaltung 14 erfolgen. Zur Zeit t = t₅ werden dann wieder die Testsignale U_{L}, U_{H} umgesteuert, so dass diese wieder die Signalzustände entsprechend der ausgeschalteten Sicherheitsausgangsschaltung 14 aufweisen, das heißt das Testsignal U_{H} nimmt wieder den Signalzustand "aus" und das Testsignal U_{L} den Signalzustand "ein" ein.

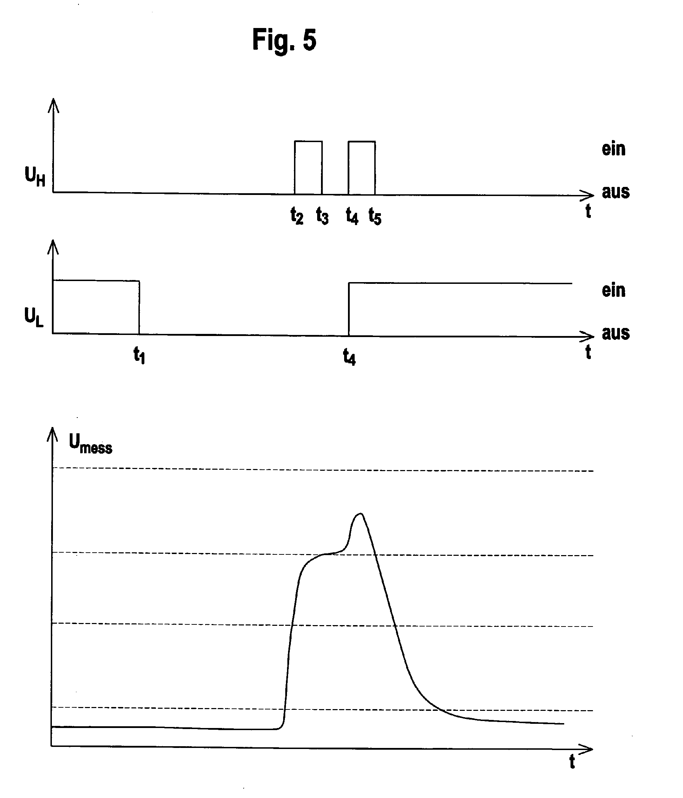

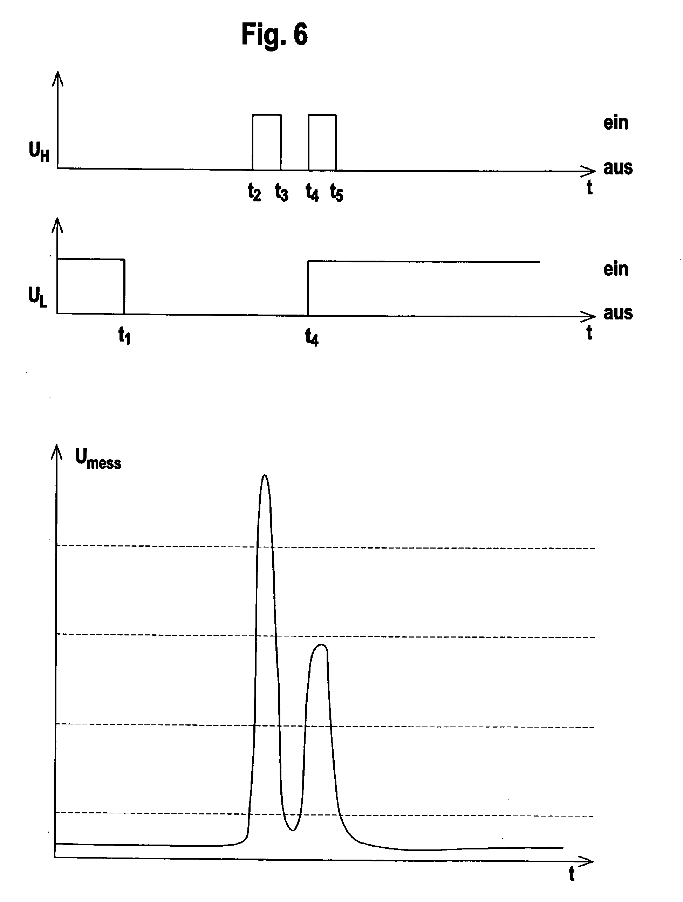

In den Figuren 5 und 6 sind alternativ zur Ausführungsform gemäß den Figuren 4a, b weitere mögliche Testzyklen für die Sicherheitsausgangsschaltung 14 dargestellt.

Die Figuren 5 und 6 zeigen die Zeitverläufe der Testsignale U_{H}, U_{L} und der dadurch generierten Mess-Signale bei fehlerfreier Funktion der Sicherheitsausgangsschaltung 14 im ausgeschalteten Zustand. Dabei zeigt Figur 5 die Mess-Signale für den Fall, dass an den Schaltausgang 24 eine kapazitive Last 25 angeschlossen ist. Figur 6 zeigt die Mess-Signale für den Fall; dass an den Schaltausgang 24 eine ohmsche Last 25 angeschlossen ist.

Wie aus dem Vergleich der Figuren 5 und 6 ersichtlich werden mit denselben Testsignalen U_{H}, U_{L} je nach Art der am Schaltausgang 24 anliegenden Last 25 unterschiedliche Mess-Signale bei fehlerfreier Funktion der Sicherheitsausgangsschaltung 14 erhalten. Zur Funktionsüberprüfung sind die Mess-Signale für unterschiedliche Lasten 25, die bei fehlerfreier Funktion der Sicherheitsausgangsschaltung 14 erhalten werden, in der Rechnereinheit 13 als Referenzwerte abgespeichert und werden zur Funktionskontrolle mit den aktuell ermittelten Mess-Signalen verglichen. Das Auftreten einer Abweichung der aktuellen Mess-Signale von den Referenz-Signalen wird als Fehler innerhalb der Sicherheitsausgangsschaltung 14 interpretiert, wodurch die Sicherheitsausgangsschaltung 14 über die Rechnereinheit 13 verriegelt wird.

Wie aus den Figuren 5 und 6 ersichtlich erfolgt die Testung der Sicherheitsausgangsschaltung 14 im ausgeschalteten Zustand im Zeitintervall zwischen t₁ und t₅.

Zurzeit t₁ wechselt das Testsignal U_{L} in den Signalzustand "aus", das Testsignal U_{H} bleibt im Signalzustand "aus". Bis zum Zeitpunkt t₂ bleibt das Mess-Signal sowohl bei einer kapazitiven Last 25 (Figur 5) als auch bei einer ohmschen Last 25 (Figur 6) annähernd unverändert.

Im Zeitintervall zwischen t₂ und t₃ erfolgt analog zu Figur 4 eine Pulsanfrage mit komplementären Signalzuständen der Testsignale U_{H} (ein) und U_{L} (aus), wonach im Zeitintervall zwischen t₃ und t₄ beide Testsignale U_{H}, U_{L} auf den Signalwert "aus" gesetzt werden.

Als Antwort auf die Pulsanfrage steigt bei anliegender kapazitiver Last 25 (Figur 5) das Mess-Signal innerhalb des Zeitintervalls zwischen t₂ und t₃ sprunghaft an und verbleibt im Zeitintervall zwischen t₃ und t₄ auf einem hohen Sättigungswert. Demgegenüber steigt das Mess-Signal bei Anliegen einer ohmschen Last 25 (Figur 6) im Zeitintervall zwischen t₂ und t₃ sprunghaft an, fällt jedoch im Zeitintervall zwischen t₃ und t₄ wieder rasch ab.

Im Zeitintervall zwischen t₄ und t₅ werden zur Überprüfung der Schutzdiode 23 beide Testsignale U_{L}, U_{H} auf den Signalwert "ein" gesetzt. Dadurch wird bei fehlerfreier Funktion der Sicherheitsausgangsschaltung 14 sowohl bei anliegender kapazitiver als auch ohmscher Last 25 ein Signalpeak im Mess-Signal generiert.

Bei defekter Schutzdiode 23 bleibt in beiden Fällen der Signalpeak im Mess-Signal aus. Bei Auftreten von Fehlern in der Sicherheitsausgangsschaltung 14, wie zum Beispiel Querschlüssen gegen Versorgungsspannung oder Masse oder niederohmigen oder hochohmigen Verbindungen zur Versorgungsspannung oder gegen Masse, treten in den Zeitintervallen zwischen t₂ und t₄ Abweichungen der Mess-Signale gegenüber den in Figur 5 und 6 dargestellten Signalverläufen im fehlerfreien Fall auf, die von der Rechnereinheit 13 zur Erkennung des Fehlers ausgewertet werden.

Prinzipiell können in der Rechnereinheit 13 zur Fehlerkontrolle die kompletten Signalverläufe der Mess-Signale während der Testphasen registriert und ausgewertet werden. Da die Mess-Signale jedoch eindeutige, charakteristische Signalformen bei fehlerfreier Sicherheitsausgangsschaltung 14 aufweisen, wie in den Figuren 4 - 6 beispielhaft dargestellt ist, reichen bereits einige diskrete Abtastpunkte zur Auswertung der Mess-Signale aus.

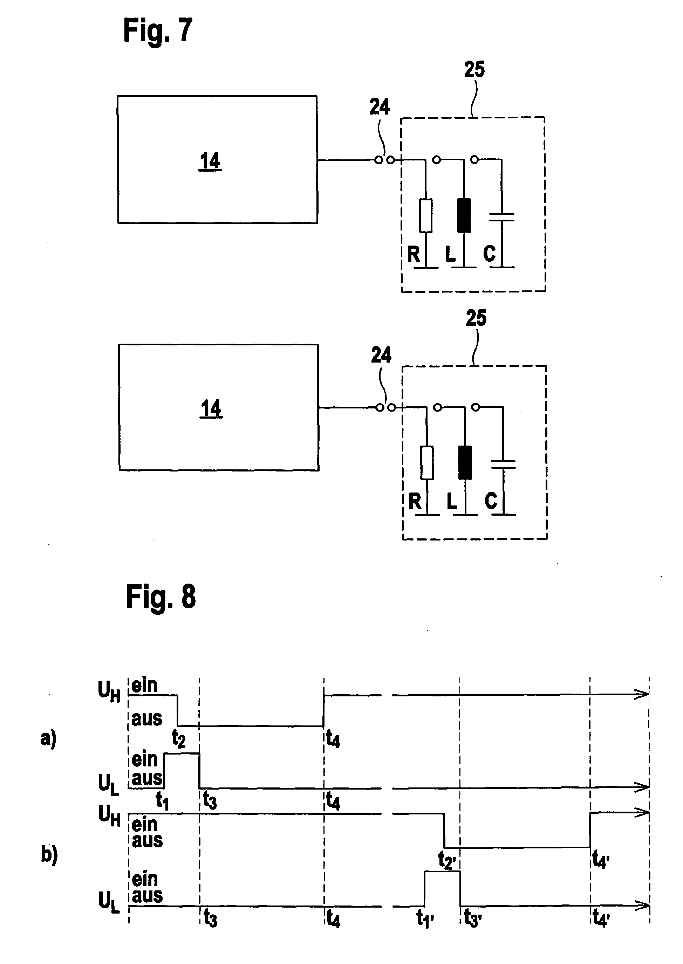

Figur 7 zeigt eine Erweiterung des optischen Sensors 1 gemäß den Figuren 1 und 2 dahingehend, dass dieser zwei identische Sicherheitsausgangsschaltungen 14 aufweist, die zur Ausgabe der Schaltsignale dienen. Mit derartigen optischen Sensoren 1 wird eine erhöhte Sicherheit dadurch erzielt, dass bei Ausfall einer Sicherheitsausgangsschaltung 14 noch die andere Sicherheitsausgangsschaltung 14 zur sicheren Ausgabe der Schaltsignale zur Verfügung steht.

Der Aufbau jeder Sicherheitsausgangsschaltung 14 entspricht dem in Figur 3 dargestellten Aufbau. Insbesondere werden von der Rechnereinheit 13 jeder Sicherheitsausgangsschaltung 14 Testsignale U_{H}, U_{L} zugeführt, wobei als Antworten wiederum die in der jeweiligen Sicherheitsausgangsschaltung 14 generierten Mess-Signale in die Rechnereinheit 13 rückgelesen werden. Entsprechend der Ausführungsform gemäß Figur 3 ist an die Schaltausgänge 24 der Sicherheitsausgangsschaltung 14 jeweils eine ohmsche, induktive und/oder kapazitive Last 25 anschließbar.

Wie aus Figur 8 ersichtlich werden die Sicherheitsausgangsschaltungen 14 durch die Rechnereinheit 13 zeitlich versetzt zueinander fortlaufend geprüft. Figur 8a zeigt hierzu die in die erste Sicherheitsausgangsschaltung 14 eingelesenen Testsignale U_{L}, U_{H}, Figur 8b zeigt die in die zweite Sicherheitsausgangsschaltung 14 eingelesenen Testsignale U_{L}, U_{H}.

Die Figuren 8a, 8b zeigen dabei die Testung der Sicherheitsausgangsschaltungen 14 im eingeschalteten Zustand. Die Testmuster für beide Sicherheitsausgangsschaltungen 14 entsprechen dabei dem in Figur 4 dargestellten Fall. Wie aus den Figuren 8a, 8b ersichtlich werden die Sicherheitsausgangsschaltungen 14 zur Testung mit identischen Testmustern beaufschlagt. Insbesondere entspricht die Dauer der Testung der ersten Sicherheitsausgangsschaltung 14 zwischen t₁ und t₄ der Dauer der Testung der zweiten Sicherheitsausgangsschaltung 14 zwischen t₁' und t₄'. Die Testung der Sicherheitsausgangsschaltungen 14 im ausgeschalteten Zustand erfolgt entsprechend den in Figuren 5 und 6 dargestellten Fällen.

Wesentlich ist, dass die Testungen beider Sicherheitsausgangsschaltungen 14 zeitlich versetzt erfolgen. Dadurch ist gewährleistet, dass die beiden Sicherheitsausgangsschaltungen 14 einzeln und unabhängig voneinander mit den Testsignalen angesprochen werden, so dass im fehlerfreien Fall jede Sicherheitsausgangsschaltung 14 unabhängig von der anderen Sicherheitsausgangsschaltung 14 als Antwort charakteristische lastunabhängige Mess-Signale liefert. Analog zu dem Ausführungsbeispiel gemäß den Figuren 4 - 6 können durch Analyse der Signalformen der Mess-Signale interne Fehler in der Sicherheitsausgangsschaltung 14 aufgedeckt werden.

Weiterhin können durch Registrierung von Abweichungen der Mess-Signale von den Signalformen im fehlerfreien Fall innerhalb der Zeitintervalle zwischen t₃ und t₄ sowie t₃' und t₄' Querschluss-Tests durchgeführt werden, bei welchen Kurzschlüsse oder Querschlüsse zwischen den Sicherheitsausgangsschaltungen 14 aufgedeckt werden können.

### Bezugszeichenliste

- (1): Optischer Sensor
- (2): Sendereinheit
- (3): Empfängereinheit
- (4): Überwachungsbereich
- (5): Sendelichtstrahlen
- (6): Sender
- (7): Erstes Gehäuse
- (8): Fenster
- (9): Sendersteuereinheit
- (10): Empfänger
- (11): Zweites Gehäuse
- (12): Zweites Fenster
- (13): Rechnereinheit
- (14): Sicherheitsausgangsschaltung
- (15): Empfangslichtstrahlen
- (16): Gehäuse
- (17): Fenster
- (18): Ablenkeinheit
- (19): Spiegel
- (20): High-Side-Treiber
- (21): Low-Side-Treiber
- (22): Diode
- (23): Schutzdiode
- (24): Schaltausgang
- (25): Last
- (26): Widerstand
- (27): Widerstand

- D: Drehachse
- t₁: Zeitpunkt
- t₁': Zeitpunkt
- t₂: Zeitpunkt
- t₂': Zeitpunkt
- t₃: Zeitpunkt
- t₃': Zeitpunkt
- t₄: Zeitpunkt
- t₄': Zeitpunkt
- t₅: Zeitpunkt
- U_{B}: Versorgungsspannung
- U_{H}: Erste Testsignale
- Uₘₑₛₛ: Mess-Signale
- U_{L}: Zweite Testsignale

## Patentansprüche

1. Optischer Sensor zur Erfassung von Objekten in einem Überwachungsbereich mit wenigstens einem Sendelichtstrahlen emittierenden Sender, wenigstens einem Empfangslichtstrahlen empfangenden Empfänger, wenigstens einer Rechnereinheit, in welcher in Abhängigkeit der Empfangssignale am Ausgang des Empfängers ein binäres Objektfeststellungssignal generiert wird, und mit wenigstens einer Sicherheitsausgangsschaltung, welche in Abhängigkeit des Objektfeststellungssignals zur Generierung eines über einen Schaltausgang ausgebbaren Schaltsignals ein- und ausschaltbar ist, **dadurch gekennzeichnet, dass** in der Rechnereinheit (13) fortlaufend Testsignale generiert und in die Sicherheitsausgangsschaltung (14) in ein- und ausgeschalteten Zustand eingelesen werden, dass in der Sicherheitsausgangsschaltung (14) als Antwort auf die Testsignale ohne Änderung des Schaltsignals Mess-Signale generiert und in die Rechnereinheit (13) rückgelesen werden, und dass in der Rechnereinheit (13) durch Auswertung der Signalformen der Mess-Signale unabhängig von einer am Schaltausgang (24) anliegenden Last (25) die Funktionsfähigkeit der Sicherheitsausgangsschaltung (14) überprüfbar ist.

2. Optischer Sensor nach Anspruch 1, **dadurch gekennzeichnet, dass** die Sicherheitsausgangsschaltung (14) einen High-Side-Treiber (20) und einen Low-Side-Treiber (21) aufweist, wobei mittels des High-Side-Treibers (20) als Einschaltvorgang ein High-Pegel am Schaltausgang (24) und mittels des Low-Side-Treibers (21) als Ausschaltvorgang ein Low-Pegel am Schaltausgang (24) generierbar ist.

3. Optischer Sensor nach Anspruch 2, **dadurch gekennzeichnet, dass** in der Rechnereinheit (13) erste Testsignale U_{H} für den High-Side-Treiber (20) und zweite Testsignale U_{L} für den Low-Side-Treiber (21) generierbar sind.

4. Optischer Sensor nach Anspruch 3, **dadurch gekennzeichnet, dass** die Mess-Signale Uₘₑₛₛ als Antworten auf die ersten und zweiten Testsignale über einen einen Spannungsteiler aufweisenden Rücklesepfad in die Rechnereinheit (13) rückgelesen werden.

5. Optischer Sensor nach einem der Ansprüche 2 - 4, **dadurch gekennzeichnet, dass** der High-Side-Treiber (20) und der Low-Side-Treiber (21) jeweils Halbleiter-Schalter aufweisen.

6. Optischer Sensor nach Anspruch 5, **dadurch gekennzeichnet, dass** der High-Side-Treiber (20) und der Low-Side-Treiber (21) jeweils als diskrete oder integrierte Halbleiterschaltungen ausgebildet sind.

7. Optischer Sensor nach einem der Ansprüche 1 - 6, **dadurch gekennzeichnet, dass** die Sicherheitsausgangsschaltung (14) wenigstens eine Schutzdiode (23) aufweist, mittels derer bei auftretenden Common-Mode-Fehlern fließende Leckströme auf einen Maximalwert begrenzbar sind.

8. Optischer Sensor nach einem der Ansprüche 1 - 7, **dadurch gekennzeichnet, dass** die Rechnereinheit (13) von einem digitalen Signalprozessor gebildet ist.

9. Optischer Sensor nach einem der Ansprüche 1 - 8, **dadurch gekennzeichnet, dass** diese zwei Sicherheitsausgangsschaltungen (14) aufweist, welche mittels zeitlich versetzter Testsignale überprüfbar sind.

10. Optischer Sensor nach einem der Ansprüche 1 - 9, **dadurch gekennzeichnet, dass** diese zwei sich gegenseitig überwachende Rechnereinheiten (13) aufweist.

11. Optischer Sensor nach einem der Ansprüche 1 - 10, **dadurch gekennzeichnet, dass** dieser von einem Lichtgitter oder einem Flächendistanzsensor gebildet ist.

12. Verfahren zur Funktionsüberprüfung einer Sicherheitsausgangsschaltung (14) eines optischen Sensors (1), welche in Abhängigkeit eines in einer Rechnereinheit (13) des optischen Sensors (1) generierten Objektfeststellungssignals zur Generierung eines über einen Schaltausgang (24) ausgebbaren Schaltsignals ein- und ausschaltbar ist, umfassend folgende Verfahrensschritte:
- Fortlaufende Generierung von Testsignalen in der Rechnereinheit (13) und Einlesen der Testsignale in die Sicherheitsausgangsschaltung (14) in ein- und ausgeschalteten Zustand, wobei die Testsignale so ausgebildet sind, dass durch diese die Schaltsignale nicht geändert werden,
- Rücklesen von in der Sicherheitsausgangsschaltung (14) als Antwort auf die Testsignale generierten Mess-Signale in die Rechnereinheit (13),
- Auswertung der Signalformen der Mess-Signale in der Rechnereinheit (13) zur Funktionsüberprüfung der Sicherheitsausgangsschaltung (14), wobei die Mess-Signale bei unterschiedlichen Lasten (25) am Schaltausgang (24) charakteristische Signalformen aufweisen, so dass die Funktionsüberprüfung der Sicherheitsausgangsschaltung (14) unabhängig von der jeweiligen Last (25) am Schaltausgang (24) durchführbar ist.

13. Verfahren nach Anspruch 12, **dadurch gekennzeichnet, dass** in der Rechnereinheit (13) für unterschiedliche Lasten (25) am Schaltausgang (24) bei fehlerfreier Funktion der Sicherheitsausgangsschaltung (14) erhaltene Signalformen von Mess-Signalen als Referenz-Signale hinterlegt sind, welche zur Funktionsüberprüfung mit den jeweiligen aktuellen Mess-Signalen verglichen werden, und dass ein Fehler der Sicherheitsausgangsschaltung (14) als erkannt gilt, wenn die aktuellen Mess-Signale von den zugeordneten Referenz-Signalen abweichen.

14. Verfahren nach Anspruch 13, **dadurch gekennzeichnet, dass** zum Vergleich der Mess-Signale mit den Referenz-Signalen jeweils diskrete Abtastpunkte der jeweiligen Signalformen herangezogen werden.

15. Verfahren nach Anspruch 14, **dadurch gekennzeichnet, dass** bei Auftreten eines Fehlers in der Sicherheitsausgangsschaltung (14) diese verriegelt wird.

16. Verfahren nach einem der Ansprüche 13 - 15, **dadurch gekennzeichnet, dass** in der Rechnereinheit (13) separate Testsignale in Form von binären Signalfolgen generiert werden, wobei jeweils eine binäre Signalfolge einem High-Side-Treiber (20) und einem Low-Side-Treiber (21) der Sicherheitsausgangsschaltung (14) zugeführt wird.

17. Verfahren nach Anspruch 16, **dadurch gekennzeichnet, dass** zur Generierung eines charakteristischen lastunabhängigen Mess-Signals dem High-Side-Treiber (20) und dem Low-Side-Treiber (21) synchron Signalimpulse mit komplementären Signalwerten als Bestandteile der Testsignale zugeführt werden.

18. Verfahren nach einem der Ansprüche 16 oder 17, **dadurch gekennzeichnet, dass** zur Funktionsüberprüfung einer in der Sicherheitsausgangsschaltung (14) integrierten Schutzdiode (23) dem High-Side-Treiber (20) und dem Low-Side-Treiber (21) synchron Signalimpulse mit gleichen Signalwerten als Bestandteile der Testsignale zugeführt werden.

19. Verfahren nach einem der Ansprüche 12 - 17, **dadurch gekennzeichnet, dass** bei einem optischen Sensor (1) mit zwei Sicherheitsausgangsschaltungen (14) diese mittels zeitlich versetzter Testsignale durch die Rechnereinheit (13) überprüft werden.

20. Verfahren nach Anspruch 19, **dadurch gekennzeichnet, dass** die den Sicherheitsausgangsschaltungen (14) zugeführten Testsignale identisch ausgebildet sind.
